# EUROPEAN PATENT APPLICATION

(11) **EP 4 847 342 A1**
(43) Date of publication of application: **02.12.2026**
(21) Application number: 26178899.6
(22) Date of filing: 15.05.2026
(51) Int. Cl.: B62B 5/00, B62B 3/00, B62B 3/10

(54) **STORAGE CART FOR WHEEL DOLLIES**

(30) Priority: 30.05.2025 US 202519223334
(71) Applicant: Zendex Tool Corp., Danbury, Conneticut 06810 (US)
(72) Inventor: Coccaro, Albert V., Mt. Kisco, 10549 (US); Coccaro, Dean A., Redding, 06896 (US); Stefani, Kevin M., Danbury, 06810 (US)
(74) Representative: Meissner Bolte Nürnberg

(57) **Abstract**

Aspects of the invention are directed to a storage cart for wheel dollies. The storage cart includes: a first arm, a second arm, a crossbeam, an insert, a first pair of swivel casters, and a second pair of swivel casters. The crossbeam spans between the first arm and the second arm, is square-tubular, and includes: a top wall, two lateral sidewalls, a bottom wall, an interior, and a cutout in the top wall. The insert penetrates the cutout into the interior and defines a cavity with an open top facing away from the crossbeam. The first pair of swivel casters are attached to the first arm, and the second pair of swivel casters are attached to the second arm. In use, the storage cart can store four wheel dollies in a relatively compact form and easily transport the four wheel dollies about a worksite as one unit.

## Description

### FIELD OF THE INVENTION

The present invention relates generally to devices for transporting heavy loads, and, more particularly, to storage carts that can be used to store and transport wheel dollies for use in repositioning vehicles.

### BACKGROUND OF THE INVENTION

United States Patent No. 4,854,803, titled "Apparatus and Method for Jacking and Dollying an Affixed Vehicle Wheel Assembly," issued to A.V. Coccaro, discloses a wheel dolly designed to lift a vehicle's wheel off the ground, enabling the vehicle to be repositioned. The invention features a "bidirectional, double pawl, lever ratchet mechanism" that, when the user pumps an actuation lever, drives two opposed rollers against the vehicle's wheel, lifting the wheel off the ground. With the vehicle supported by four such wheel dollies, it can be easily moved using the casters attached to the dollies.

Aspects of the above-identified patent have been successfully commercialized in the GOJAK^{®} line of wheel dollies offered by ZENDEX^{®} Tool Corp. (Danbury, CT, US). A GOJAK^{®} 9516 Wheel Dolly, for example, is individually capable of lifting some 2,375 pounds (lbs.) (1,077 kilograms (kg)), meaning that four such wheel dollies can accommodate most passenger cars and trucks, including electric versions of these vehicles with their heavy battery packs. To achieve this capacity, such a wheel dolly is mostly made of steel and is relatively heavy, weighing some 55 lbs. (25 kg).

Given that four wheel dollies are required to reposition a four-wheel vehicle and given that four wheel dollies together may weigh well in excess of 200 lbs. (91 kg), there is a need for a storage cart design that allows four such wheel dollies to be easily and safely moved about a worksite as one unit. Such a storage cart should ideally also allow the four wheel dollies to be stored in a compact form when not in use.

### SUMMARY OF THE INVENTION

Embodiments of the present invention address the above-identified needs by providing storage carts specifically designed to store and transport wheel dollies.

Aspects of the invention are directed to an apparatus comprising: a first arm, a second arm, a crossbeam, an insert, a first pair of swivel casters, and a second pair of swivel casters. The crossbeam spans between the first arm and the second arm, is square-tubular, and comprises: a top wall, two lateral sidewalls, a bottom wall, an interior, and a cutout in the top wall. The insert penetrates the cutout into the interior and defines a cavity with an open top facing away from the crossbeam. The first pair of swivel casters are attached to the first arm, and the second pair of swivel casters are attached to the second arm.

Advantageously, embodiments in accordance with aspects of the invention provide storage carts for wheel dollies allowing the wheel dollies to be stored in a compact form and easily transported as one unit about a worksite.

In a preferred embodiment of the apparatus the first arm and the second arm run parallel to each other; and the crossbeam runs perpendicular to the first arm and the second arm.

In a preferred embodiment of the apparatus the crossbeam comprises a channel; and the first arm penetrates the channel.

In a preferred embodiment, the apparatus further comprises a bolt penetrating the first arm and the crossbeam.

In a preferred embodiment of the apparatus, the first arm and the second arm are square-tubular.

In a preferred embodiment, the apparatus further comprises a support disposed in the cutout so that a portion of the support resides inside the interior while another portion of the support extends outside the crossbeam above the cutout.

In a preferred embodiment, the support comprises a first pair of parallel sidewalls; and a second pair of parallel sidewalls spanning perpendicularly between the first pair of parallel sidewalls; wherein the first pair of parallel sidewalls and the second pair of parallel sidewalls combine to define a passage containing a portion of the insert.

In a preferred embodiment, the first pair of parallel sidewalls are longer than the second pair of parallel sidewalls; the first pair of parallel sidewalls are disposed on the bottom wall; the two lateral sidewalls define two edges exposed by the cutout; and each of the second pair of parallel sidewalls are disposed on a respective one of the two edges.

In a preferred embodiment, the first pair of parallel sidewalls define a pair of tabs; the bottom wall defines a pair of slits; and the pair of tabs engage the pair of slits.

In a preferred embodiment, the insert further defines a slot; and a cuff; the first pair of parallel sidewalls and the second pair of parallel sidewalls are at least partially disposed in the slot; and the cuff is at least partially disposed on the top wall external the crossbeam.

In a preferred embodiment, the support is joined to the crossbeam.

In a preferred embodiment, the cavity defines a tapered region that flares outward moving towards the open top.

In a preferred embodiment, the apparatus further comprises a wheel dolly inserted into the insert.

In a preferred embodiment, the wheel dolly comprises a square-tubular extension inserted into the insert.

In a preferred embodiment, the first pair of swivel casters and the second pair of swivel casters support the wheel dolly.

In a preferred embodiment, the apparatus further comprises a second cutout in the top wall; a second insert penetrating the second cutout into the interior; a third cutout in the top wall; a third insert penetrating the third cutout into the interior; a fourth cutout in the top wall; and a fourth insert penetrating the fourth cutout into the interior.

In a preferred embodiment, the apparatus further comprises four wheel dollies, each inserted into a respective one of the insert, the second insert, the third insert, and the fourth insert.

In a preferred embodiment, the first pair of swivel casters and the second pair of swivel casters support the four wheel dollies.

In a preferred embodiment, the apparatus further comprises a handle attached to another element of the apparatus.

### BRIEF DESCRIPTION OF THE DRAWINGS

These and other features, aspects, and advantages of the present invention will become better understood with regard to the following description, appended claims, and accompanying drawings where:
FIG. 1 shows a partially exploded, perspective view of a storage cart in accordance with an illustrative embodiment of the invention in association with four wheel dollies;
FIG. 2 shows another perspective view of the FIG. 1 storage cart without the four wheel dollies;
FIGS. 3 and 4 each show broken perspective views of the region of the FIG. 1 storage cart indicated in FIG. 2;
FIG. 5 shows an exploded perspective view of an insert, a support, and a crossbeam in the FIG. 1 storage cart;
FIGS. 6 and 7 show sectional views of the FIG. 5 elements in their installed positions along the cleave planes indicated in FIG. 4;
FIGS. 8 and 9 illustrate sectional views similar to that depicted in FIG. 6 showing the insertion process of a square-tubular extension of a wheel dolly into the FIG. 1 storage cart;
FIG. 10 shows an exploded, partially broken, perspective view of three different inserts in combination with a support and a crossbeam from the FIG. 1 storage cart; and
FIG. 11 shows an exploded perspective view of an alternative storage cart including a handle.

### DETAILED DESCRIPTION OF THE INVENTION

The present invention will be described with reference to illustrative embodiments. For this reason, numerous modifications can be made to these embodiments, and the results will still come within the scope of the invention. No limitations with respect to the specific embodiments described herein are intended or should be inferred.

As used herein and in the appended claims, a "wheel dolly" encompasses any device that can lift a vehicle's wheel and support it on casters. An element that is "square-tubular" comprises either square tubing or rectangular tubing. An element has a "square cross-section" if its cross-section is either square or rectangular.

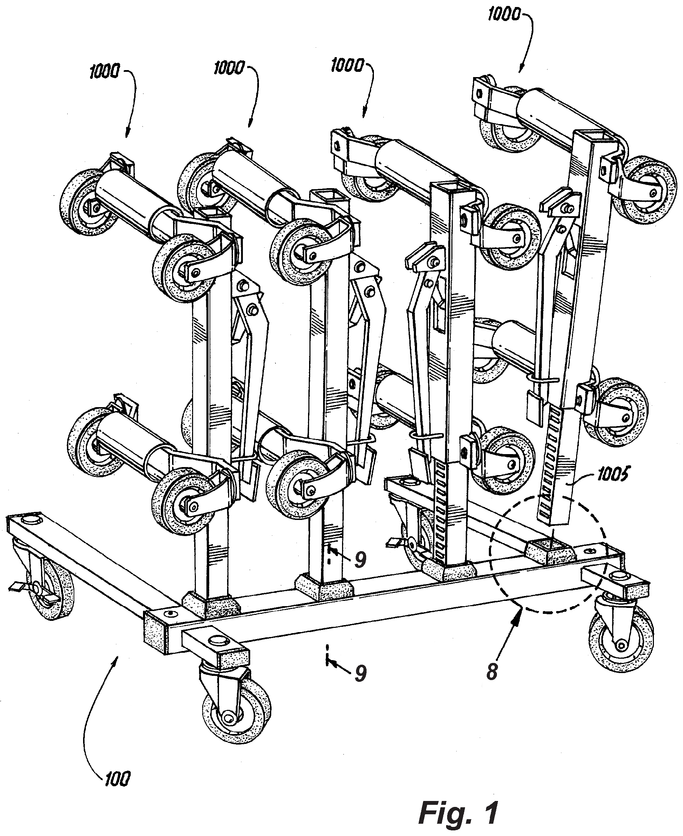

Aspects of the invention are set forth herein in relation to an illustrative storage cart for storing and transporting wheel dollies. FIG. 1 shows a partially-exploded perspective view of a storage cart 100 in accordance with an illustrative embodiment of the invention. The storage cart 100 is supporting four wheel dollies 1000. Each wheel dolly 1000 includes a square-tubular extension 1005 that is removably inserted into the storage cart 100. Adding one of the four wheel dollies 1000 to the storage cart 100 is accomplished by lowering that wheel dolly's square-tubular extension 1005 vertically into the storage cart 100. Removal is accomplished by lifting the square-tubular extension 1005 vertically upward away from the storage cart 100. So arranged, the storage cart 100 supports the four wheel dollies 1000 in a relatively compact form and allows the four wheel dollies 1000 to be easily moved as one unit.

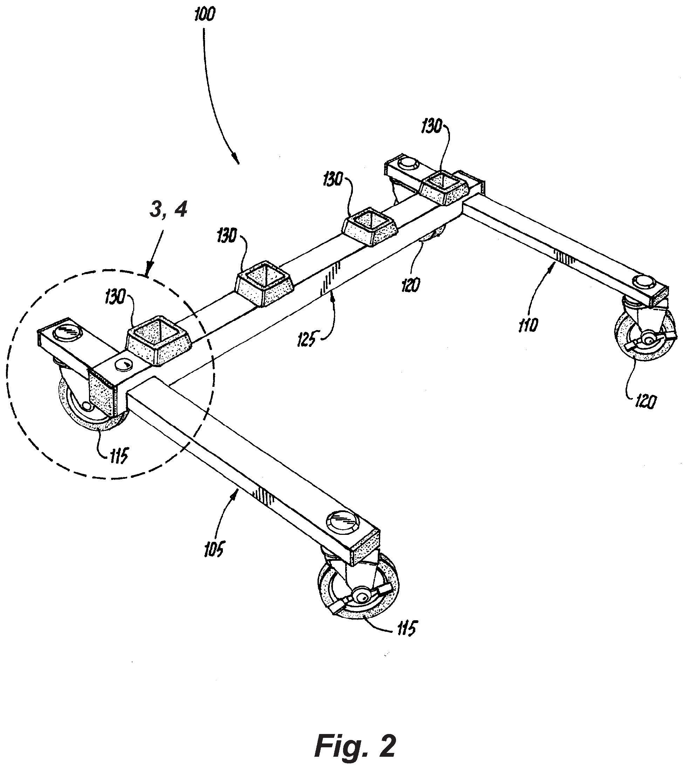

FIG. 2 provides additional details of the storage cart 100, which is shown in perspective view without the four wheel dollies 1000. The storage cart 100 comprises a first arm 105 and a second arm 110, which run parallel to one another. A first pair of swivel casters 115 are attached to the ends of the first arm 105, while a second pair of swivel casters 120 are attached to the ends of the second arm 110. A crossbeam 125 runs perpendicular to the first arm 105 and the second arm 110 and spans between the first arm 105 and the second arm 110. The crossbeam 125 comprises square tubing, while the first arm 105 and the second arm 110 comprise rectangular tubing. Four inserts 130 are distributed along the crossbeam 125 and are adapted to receive the square-tubular extensions 1005 of the wheel dollies 1000 in the manner shown in FIG. 1.

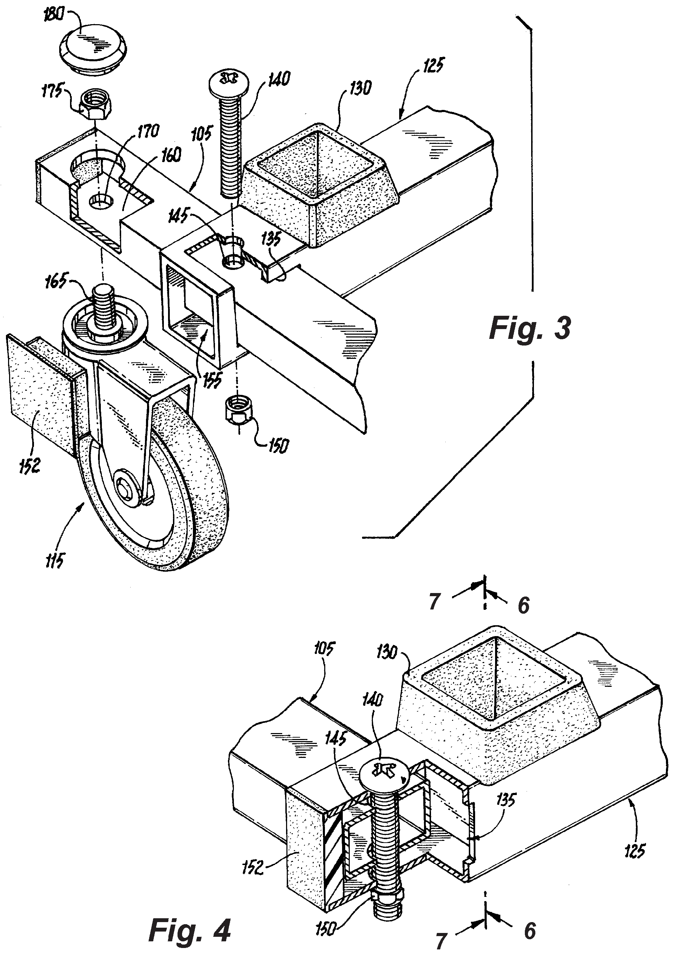

FIGS. 3 and 4 each show partially broken perspective views of the region of the storage cart 100 indicated in FIG. 2. Although only the interfacial region between the first arm 105 and the crossbeam 125 is illustrated in these figures, FIGS. 3 and 4 more generally illustrate how the arms 105, 110 are attached to the crossbeam 125 and how the swivel casters 115, 120 are mounted to the arms 105, 110.

The crossbeam 125 defines a channel 135 to receive a portion of the first arm 105. The first arm 105 penetrates the channel 135 such that a segment of the first arm 105 extends through the crossbeam 125. An arm bolt 140 extends through aligned arm openings 145 formed in the crossbeam 125 and the first arm 105, thereby securing the first arm 105 to the crossbeam 125. An arm nut 150 threadably engages the arm bolt 140 to retain the arm bolt 140 in position and maintain the attachment of the first arm 105 to the crossbeam 125. A square cap 152 is fitted to an end of the crossbeam 125 to close an open crossbeam end 155 and thereby provide an aesthetically pleasing termination to the crossbeam 125 while preventing debris from entering the crossbeam 125.

One of the pair of first swivel casters 115 is mounted to a base 160 of the first arm 105. The swivel caster 115 includes a threaded stud 165, which extends upwardly and penetrates a corresponding caster opening 170 in the base 160 of the first arm 105. A caster nut 175 threadably engages the threaded stud 165 to secure the swivel caster 115 to the first arm 105. A circular cap 180 is positioned over the threaded stud 165, again to provide a finished appearance and to prevent debris accumulation.

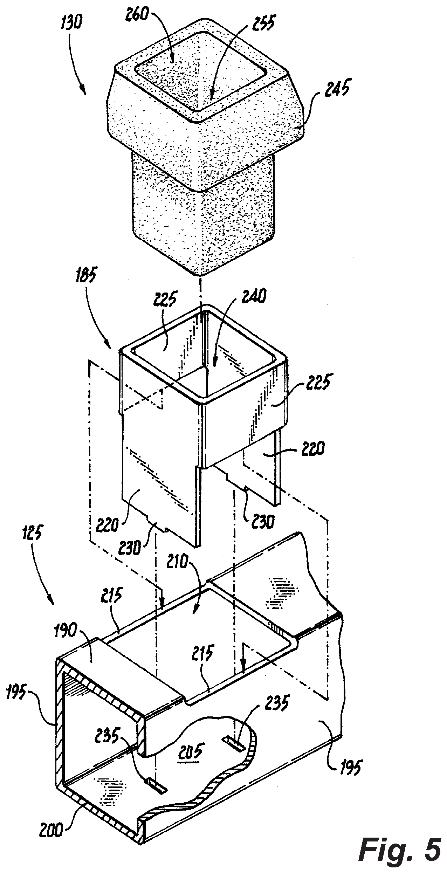

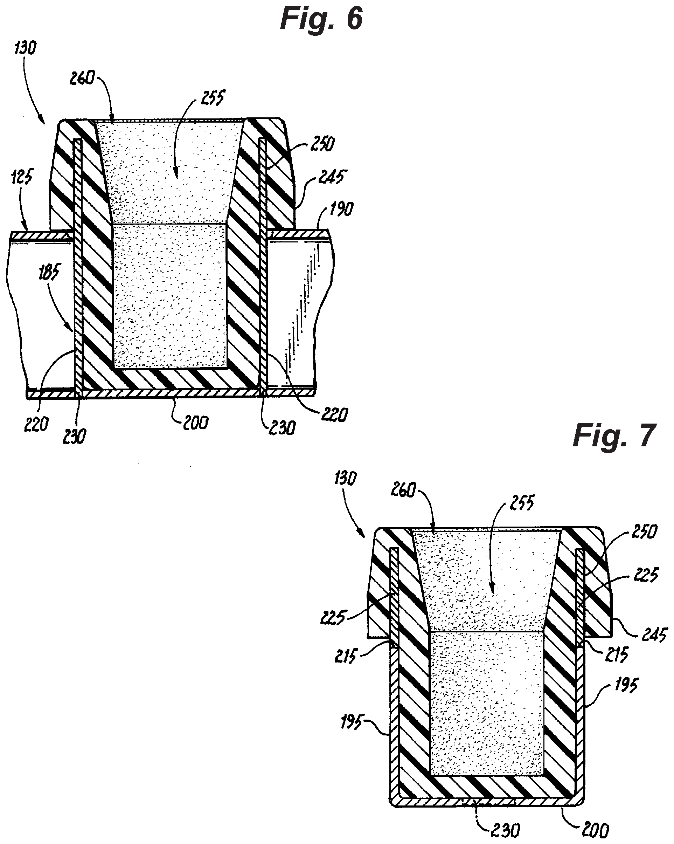

As indicated above, the storage cart 100 includes four inserts 130 that are positioned along the crossbeam 125. Each of the four inserts 130 is supported by a respective support element that is not visible in the preceding figures. FIG. 5 provides an exploded perspective view of a representative one of the four inserts 130 with a support 185 and the crossbeam 125, illustrating the relationship between these elements. FIGS. 6 and 7 provide sectional views of the insert 130 and the support 185 in their installed positions in the crossbeam 125 along the cleave planes indicated in FIG. 4.

The crossbeam 125 is constructed with a top wall 190, two lateral sidewalls 195, and a bottom wall 200, which combine to define an interior 205 of the crossbeam 125. At the location of the insert 130, the crossbeam 125 defines a cutout 210, which exposes two edges 215 of the lateral sidewalls 195.

The support 185 is positioned within the cutout 210 so that a portion of the support 185 resides inside the interior 205 while another portion of the support 185 extends external the crossbeam 125 above the cutout 210. The support 185 comprises a first pair of parallel sidewalls 220 and a second pair of parallel sidewalls 225. The second pair of parallel sidewalls 225 span perpendicularly between the first pair of parallel sidewalls 220. The first pair of parallel sidewalls 220 are longer than the second pair of parallel sidewalls 225 and are disposed on the bottom wall 200 of the crossbeam 125. Two tabs 230 on the first pair of parallel sidewalls 220 engage two corresponding slits 235 in the bottom wall 200 of the crossbeam 125. The second pair of parallel sidewalls 225 are disposed on the two edges 215 exposed by the cutout 210. So positioned, the first and second pairs of sidewalls 220, 225 define a passage 240 with a square cross-section that is positioned above the cutout 210.

The support 185 is preferably joined to the crossbeam 125 by, for example, welding or adhesive bonding. A suitable location for the joining may be where the pair of second parallel sidewalls 225 abut the two edges 215 of the lateral sidewalls 195 of the crossbeam 125. Additionally or alternatively, joining may occur where the tabs 230 of the first pair of parallel sidewalls 220 engage the slits 235 in the bottom wall 200 of the crossbeam 125.

The insert 130 features a cuff 245, a slot 250, and a cavity 255. When placed, the insert 130 is passed through the passage 240 of the support 185 into the cutout 210. The slot 250 receives the parallel sidewalls 220 and 225 projecting above the crossbeam 125. Once in position, a lower portion of the insert 130 rests on the bottom wall 200, while an upper portion remains above the crossbeam 125 within the passage 240. Part of the cuff 245 sits on the top wall 190 of the crossbeam 125. The cavity 255 has an open top 260 facing away from the crossbeam 125. Generally, the insert 130 may be held in place by gravity and does not require permanent installation.

The weight of the wheel dolly 1000 may be significant (e.g., 55 lbs. (25 kg)). Moreover, when attached to the storage cart 100 via its square-tubular extension 1005, the weight of the wheel dolly 1000 is concentrated within a relatively small area, increasing the stress on the insert 130. Additionally, the wheel dolly 1000 may generate significant torsional forces on the insert 130.

To counteract these forces, the support 185 and the crossbeam 125 function together to provide the necessary reinforcement for the insert 130. Along the longitudinal axis of the crossbeam 125, the insert 130 is supported by the first pair of parallel sidewalls 220. Along the lateral axis of the crossbeam 125, the insert 130 is supported by the second pair of parallel sidewalls 225 as well as the lateral sidewalls 195 of the crossbeam 125. At the same time, a portion of the cuff 245 of the insert 130 rests on the top wall 190 of the crossbeam 125, while the bottom of the insert 130 rests on the bottom wall 200 of the crossbeam 125. Ultimately, the combined structural support provided by the support 185 and the crossbeam 125 enables the insert 130 to endure the concentrated weight of the wheel dolly 1000 while also resisting the torsional forces exerted upon it.

The arms 105, 110, the crossbeam 125, and the support 185 are preferably constructed from metal, such as steel, to provide durability and structural integrity. The arms 105, 110 and the crossbeam 125 may be formed utilizing conventional square- and rectangular-tubing stock and may be processed through standard laser cutting methods. The support 185 may be manufactured by stamping and bending.

In contrast, the inserts 130 are preferably formed from a high-performance plastic material and may be produced using conventional plastic forming techniques such as injection molding. The plastic material for the inserts 130 preferably exhibits sufficient lubricity to facilitate the smooth insertion of the square-tubular extensions 1005 of the wheel dollies 1000 while maintaining enough structural rigidity to withstand the weight and torsional forces exerted by the wheel dollies 1000. Suitable plastics for the inserts may include PTFE (Polytetrafluoroethylene), UHMWPE (Ultra-High Molecular Weight Polyethylene), POM (Polyoxymethylene or Acetal), PEEK (Polyetheretherketone), PAI (Polyamide-Imide), and Nylon (PA). These materials ensure the inserts 130 can withstand the weight and torsional forces exerted by the wheel dollies 1000 while allowing for easy insertion and secure placement.

Notably, the inserts 130 allow the storage cart 100 to be easily modified to accommodate wheel dollies of different sizes. Smaller wheel dollies tend to have smaller square-tubular extensions while larger wheel dollies tend to have larger square-tubular extensions. The storage cart 100 can be modified to accommodate these differently-sized wheel dollies simply by supplying the storage cart 100 with inserts 130 having differently sized cavities 255. The remainder of the storage cart 100 (e.g., the crossbeam 125, the arms 105, 110, the supports 185, and the swivel casters 115, 120) need not be modified. The design thereby becomes modular in this regard.

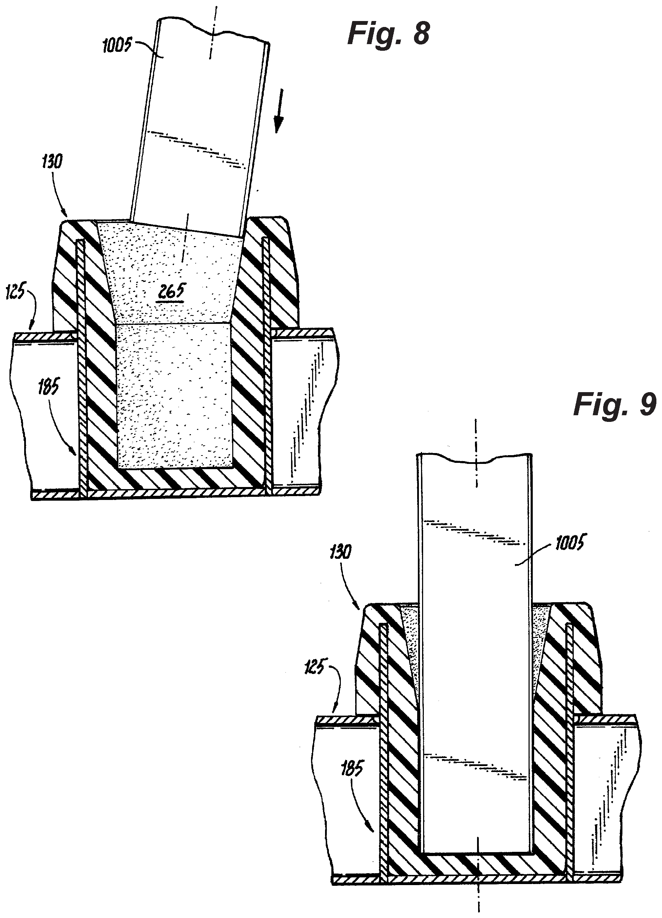

As indicated in FIG. 1, mounting the wheel dolly 1000 on the storage cart 100 is as easy as inserting the square-tubular extension 1005 of the wheel dolly 1000 into one of the inserts 130 of the storage cart 100. The cavities 255 of the inserts 130 are preferably tapered to facilitate the easy insertion of the square-tubular extensions 1005 of the wheel dolly 1000 into the inserts 130. FIGS. 8 and 9 illustrate sectional views similar to that depicted in FIG. 6, showing the insertion process of the square-tubular extension 1005 of the wheel dolly 1000 into the storage cart 100 in the regions set forth in FIG. 1.

The cavity 255 includes a tapered region 265 near its top that flares outward as one moves towards the open top 260, assisting in guiding the square-tubular extension 1005 into proper alignment. This tapered region 265 compensates for misalignment during initial insertion, ensuring that even if the square-tubular extension 1005 is inserted off-axis, as illustrated in FIG. 8, it can still be properly positioned within the insert 130.

Once inserted, withdrawal of the wheel dolly 1000 from the storage cart 100 can be accomplished simply by lifting the wheel dolly 1000 vertically away from the storage cart 100.

Thus, in accordance with aspects of the invention, the storage cart 100 (an apparatus) comprises: the first arm 105, the second arm 110, the crossbeam 125, the insert 130, the first pair of swivel casters 115, and the second pair of swivel casters 120. The crossbeam 125 spans between the first arm 105 and the second arm 110, is square-tubular, and comprises: the top wall 190, two lateral sidewalls 195, the bottom wall 200, the interior 205, and the cutout 210 in the top wall 190. The insert 130 penetrates the cutout 210 into the interior 205 and defines a cavity 255 with the open top 260 facing away from the crossbeam 125. The first pair of swivel casters 115 are attached to the first arm 105, and the second pair of swivel casters 12 are attached to the second arm 110.

The storage cart 100, and more generally, storage carts in accordance with aspects of the invention, offer several advantages to a user in storing and transporting wheel dollies. These advantages include, for example, the ability to securely and compactly store four wheel dollies in a space-efficient manner. Additionally, they allow the wheel dollies to be easily transported as a single unit via swiveling casters in even tight spaces. Lastly, aspects of the invention enable the storage carts to withstand the weight and torsional forces exerted by the wheel dollies, while also permitting the insertion of the wheel dollies into the storage cart even if introduced off-axis.

It should again be emphasized that the above-described embodiments of the invention are intended to be illustrative only. Other embodiments can use different types and arrangements of elements for implementing the described functionality. These numerous alternative embodiments within the scope of the appended claims will be apparent to one skilled in the art. The spirit and scope of the appended claims should not be limited solely to the description of the preferred embodiments contained herein.

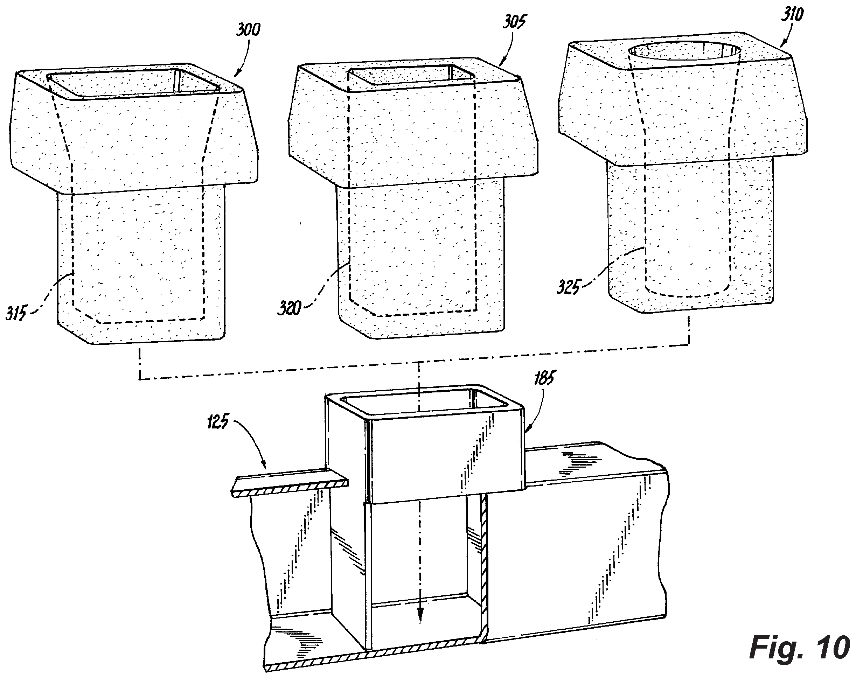

For example, in one or more additional embodiments falling within the scope of the invention, the insert may have a different design from the insert 130 set forth above. FIG. 10 shows an exploded, partially broken, perspective view of three different inserts 300, 305, 310 in combination with the support 185 and the crossbeam 125 from the storage cart 100. In each case, the three different inserts 300, 305, 310 are made partially transparent to show their respective cavities 315, 320, 325. The cavity 315 of the leftmost insert 300 is similar to the cavity 255 in that it is tapered near its top. The cavity 320 in the middle insert 305, in contrast, is straight-walled without any taper. Finally, the cavity 325 in the rightmost insert 310 is round so that it may accept an object that has a round-tubular extension.

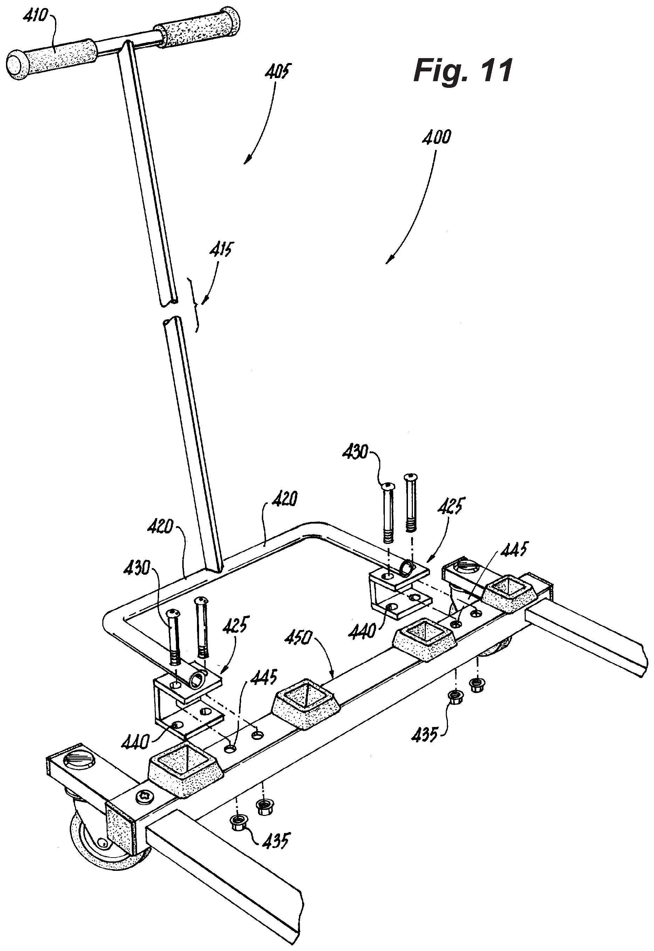

Moreover, optionally, the storage cart may be supplemented with a handle to aid in rolling the storage cart about a worksite. FIG. 11 shows an exploded perspective view of an alternative storage cart 400 including a handle 405. The handle 405 includes a t-handle 410, a primary extension rod 415, two secondary extension rods 420, two brackets 425, four handle bolts 430, and four handle nuts 435. The t-handle 410 is at a top of the handle 405 and attaches to the primary extension rod 415, which extends downward. At a bottom of the handle 405, the primary extension rod 415 splits into the two secondary extension rods 420, which each terminate in a respective one of the two brackets 425. Each bracket 425 includes bracket holes 440 that are indexed with crossbeam holes 445 in a crossbeam 450. The handle bolts 430 penetrate the bracket holes 440 and the crossbeam holes 445 and are threadably engaged by the handle nuts 435 so as to removably attach the handle 405 to the crossbeam 450. While the handle 405 is attached to the crossbeam 450 in FIG. 11, alternative embodiments may have a handle attached to an arm or some other portion of the storage cart.

All the features disclosed herein may be replaced by alternative features serving the same, equivalent, or similar purposes, unless expressly stated otherwise. Thus, unless expressly stated otherwise, each feature disclosed is one example only of a generic series of equivalent or similar features.

## Claims

1. An apparatus comprising:
a first arm;
a second arm;
a crossbeam spanning between the first arm and the second arm, being square-tubular, and comprising:
a top wall;
two lateral sidewalls;
a bottom wall;
an interior; and
a cutout in the top wall;
an insert penetrating the cutout into the interior and defining a cavity with an open top facing away from the crossbeam;
a first pair of swivel casters attached to the first arm; and
a second pair of swivel casters attached to the second arm.

2. The apparatus of claim 1, wherein:
the first arm and the second arm run parallel to each other; and
the crossbeam runs perpendicular to the first arm and the second arm.

3. The apparatus of any of claims 1 or 2, wherein:
the crossbeam comprises a channel; and
the first arm penetrates the channel.

4. The apparatus of any of the preceding claims, further comprising a bolt penetrating the first arm and the crossbeam.

5. The apparatus of any of the preceding claims, wherein the first arm and the second arm are square-tubular.

6. The apparatus of any of the preceding claims, further comprising a support disposed in the cutout so that a portion of the support resides inside the interior while another portion of the support extends outside the crossbeam above the cutout.

7. The apparatus of claim 6, wherein the support comprises:
a first pair of parallel sidewalls; and
a second pair of parallel sidewalls spanning perpendicularly between the first pair of parallel sidewalls;
wherein the first pair of parallel sidewalls and the second pair of parallel sidewalls combine to define a passage containing a portion of the insert.

8. The apparatus of claim 7, wherein:
the first pair of parallel sidewalls are longer than the second pair of parallel sidewalls;
the first pair of parallel sidewalls are disposed on the bottom wall;
the two lateral sidewalls define two edges exposed by the cutout; and
each of the second pair of parallel sidewalls are disposed on a respective one of the two edges.

9. The apparatus of any of claims 7 or 8, wherein:
the first pair of parallel sidewalls define a pair of tabs;
the bottom wall defines a pair of slits; and
the pair of tabs engage the pair of slits.

10. The apparatus of any of claims 7 to 9, wherein:
the insert further defines:
a slot; and
a cuff;
the first pair of parallel sidewalls and the second pair of parallel sidewalls are at least partially disposed in the slot; and
the cuff is at least partially disposed on the top wall external the crossbeam.

11. The apparatus of any of claims 6 to 10, wherein the support is joined to the crossbeam.

12. The apparatus of any of the preceding claims, wherein the cavity defines a tapered region that flares outward moving towards the open top.

13. The apparatus of any of the preceding claims, further comprising a wheel dolly inserted into the insert.

14. The apparatus of claim 13, wherein the wheel dolly comprises a square-tubular extension inserted into the insert.

15. The apparatus of any of claims 13 or 14, wherein the first pair of swivel casters and the second pair of swivel casters support the wheel dolly.

16. The apparatus of any of the preceding claims, further comprising:
a second cutout in the top wall;
a second insert penetrating the second cutout into the interior;
a third cutout in the top wall;
a third insert penetrating the third cutout into the interior;
a fourth cutout in the top wall; and
a fourth insert penetrating the fourth cutout into the interior.

17. The apparatus of claim 16, further comprising four wheel dollies, each inserted into a respective one of the insert, the second insert, the third insert, and the fourth insert.

18. The apparatus of claim 17, wherein the first pair of swivel casters and the second pair of swivel casters support the four wheel dollies.

19. The apparatus of any of the preceding claims, further comprising a handle attached to another element of the apparatus.
